# EUROPEAN PATENT APPLICATION

(11) **EP 2 930 034 A1**
(43) Date of publication of application: **14.10.2015**
(21) Application number: 13859703.4
(22) Date of filing: 05.12.2013
(51) Int. Cl.: B60C 7/10, B60C 7/24

(54) **PUNCTURE RESISTANT TUBE FOR BICYCLE TIRE, AND FOAM MOLD FOR MANUFACTURE OF SAID PUNCTURE RESISTANT TUBE FOR BICYCLE TIRE**

(30) Priority: 06.12.2012 KR 20120011436 U; 08.01.2013 KR 20130000170 U; 20.03.2013 KR 20130002095 U
(71) Applicant: Tayakorea Co., Ltd., Gyronggi-do 459-813 (KR)
(72) Inventor: CHO, Yong-Gyu, Hwasung-si, Gyeongi-do 445-716 (KR)
(74) Representative: Ter Meer Steinmeister & Partner
(86) International application number: PCT/KR2013/011193
(87) International publication number: WO 2014/088334

(57) **Abstract**

A puncture resistant tube for a bicycle tire fitted to a rim of a bicycle wheel includes a tube body inserted into the bicycle tire along a tube insertion recess formed within the bicycle tire and an elastic recess depressed into the tube body adjacent to the portion of the bicycle tire to be fitted to the rim. When the portion of the bicycle tire to be fitted to the rim is shrunk by external force, elastic force is accumulated in the portion of the tube body surrounding the elastic recess while the elastic recess is being shrunk. When the bicycle tire is completely fitted to the rim, the elastic recess is restored to the original shape thereof by the accumulated elastic force, whereby the portion of the tire fitted to the rim is restored to the original shape thereof.

## Description

### TECHNICAL FIELD

The present invention relates to a puncture resistant tube for a bicycle tire and a foam mold for the manufacture of the puncture resistant tube for a bicycle tire.

### BACKGROUND ART

A puncture resistant tube for a bicycle tire is inserted into a bicycle tire fitted to the rim of a bicycle wheel. Such a puncture resistant tube is configured to prevent the tire from being flattened, thereby overcoming a safety problem and inconvenience resulting from a flattened tire.

In the related art, the puncture resistant tube for a bicycle tire is shaped such that the puncture resistant tube fills the entire interior of the tire.

Examples of puncture resistant tubes for a bicycle tire may include Korean Patent Application Publication No. 10-2012-0102420 (entitled *"BICYCLE WHEEL FOR PREVENTING PUNCTURE WITHOUT AIR INJECTION")* and Korean Patent No. 10-1195823 (entitled *"BICYCLE WHEEL FOR PREVENTING PUNCTURE WITHOUT AIR INJECTION"*).

However, since the puncture resistant tubes for bicycle tires of the related art are shaped such that the puncture resistant tube fills the entire interior of the tire, it is difficult to adjust the balance of the tire. Consequently, it is difficult to obtain elasticity combinations optimized for the front wheel and the rear wheel, which may be problematic.

In addition, when a bicycle tire having the puncture resistant tube inserted thereinto along the tube insertion recess formed within the bicycle tire is attempted to be fitted to a rim, the portion of the bicycle tire to be fitted to the rim must be shrunk and subsequently restored to the original shape thereof. However, in the puncture resistant tube for a bicycle tire according to the related art including the above-stated documents, the bicycle tire with the puncture resistant tube inserted thereinto has substantially no elasticity. Therefore, the operation of fitting the bicycle tire with the puncture resistant tube inserted thereinto to the rim requires a considerable amount of external force from a person who is working on the bicycle tire. Accordingly, this operation is rendered difficult and cumbersome, which is problematic.

### DISCLOSURE

### Technical Problem

An object of the present invention is to provide a puncture resistant tube for a bicycle tire and a foam mold for the manufacture of the puncture resistant tube for a bicycle tire, in which the balance of a bicycle tire can be adjusted in a simple manner, and the bicycle tire having the puncture resistant tube inserted thereinto can be fitted to a rim in a simple manner.

### Technical Solution

According to an aspect of the present invention, provided is a puncture resistant tube for a bicycle tire. The puncture resistant tube is inserted into a bicycle tire fitted to a rim of a bicycle wheel.

The puncture resistant tube includes: a tube body inserted into the bicycle tire along a tube insertion recess formed within the bicycle tire; and an elastic recess depressed to a predetermined depth into the tube body adjacent to a portion of the bicycle tire to be fitted to the rim.

When the portion of the bicycle tire to be fitted to the rim is shrunk by external force such that the bicycle tire with the tube body inserted into the tube insertion recess thereof is fitted to the rim, elastic force is accumulated in a portion of the tube body surrounding the elastic recess while the elastic recess is being shrunk. When the bicycle tire is completely fitted to the rim, the elastic recess is restored to an original shape thereof by the elastic force accumulated in the portion of the tube body surrounding the elastic recess, whereby the portion of the tire fitted to the rim is restored to an original shape thereof.

According to another aspect of the present invention, provided is a foam mold for manufacture of the above-described puncture resistant tube for a bicycle tire.

The foam mold includes: a foam mold body allowing a foam material supplied from an external source to flow therethrough such that the foam material is inserted into the tube insertion recess to form the tube body along the tube insertion recess; and a plurality of the foam nozzles protruding from the foam mold body by a predetermined length, the plurality of the foam nozzles allowing the foam material flowing along the foam mold body to foam within the tube insertion recess.

When the foam material is injected through the foam nozzles, a portion of the tube insertion recess into which the foam mold body is inserted forms the elastic recess of the tube body, a portion of the tube insertion recess into which the foam nozzles are inserted forms the second depressed recess of the tube body, and a portion of the tube insertion recess between the foam nozzles forms the elasticity-providing bridge.

According to further another aspect of the present invention, provided is a puncture resistant tube for a bicycle tire. The puncture resistant tube is inserted into a bicycle tire fitted to a rim of a bicycle wheel.

The puncture resistant tube includes: a tube body inserted into the bicycle tire to be fitted to the rim of the bicycle wheel; an elasticity-providing recess depressed to a predetermined depth into the tube body adjacent to a portion of the bicycle tire to be fitted to the rim; and a weight-reducing member inserted into the tube body to reduce a weight of the tube body.

When the portion of the bicycle tire to be fitted to the rim is shrunk by external force such that the bicycle tire with the tube body inserted thereinto is fitted to the rim, elastic force is accumulated in a portion of the tube body surrounding the elasticity-providing recess while the elasticity-providing recess is being shrunk. When the bicycle tire is completely fitted to the rim, the elasticity-providing recess is restored to an original shape thereof by the elastic force accumulated in the portion of the tube body surrounding the elasticity-providing recess, whereby the portion of the bicycle tire fitted to the rim is restored to an original shape thereof

### Advantageous Effects

According to the foam mold for the manufacture of a puncture resistant tube, the elasticity-providing recess is formed in the tube body, making it possible to adjust the balance of the bicycle tire with the puncture resistant tube for a bicycle tire coupled thereto in a simple manner by adjusting the shape, the size, and the like of the elasticity-providing recess. Consequently, it is possible to obtain elasticity combinations optimized for the front wheel and the rear wheel of a bicycle. The bicycle tire with the puncture resistant tube for a bicycle tire inserted thereinto can be fitted to the rim in a simple manner, whereby the bicycle tire can be easily attached to and detached from the rim. The weight of the bicycle tire is reduced by an amount equal to the size of the elastic recess, whereby the bicycle tire can be lightened.

In the puncture resistant tube for a bicycle tire and the foam mold for the manufacture of the puncture resistant tube for a bicycle tire according to another aspect of the present invention, the tube body is provided with the second depressed recess and the elasticity-providing bridge are formed as well as the elasticity-providing recess, making it possible to obtain more precise elasticity combinations optimized for the front wheel and the rear wheel of a bicycle by adjusting the shape, size, or the like of the second depressed recess and the elasticity-providing bridge as well as the elasticity-providing recess. It is possible to more easily attach or detach the bicycle tire to or from the rim. The weight of the bicycle tire is reduced by an amount equal to the size of the elasticity-providing recess and the size of the second depressed recess, whereby the bicycle tire can be further lightened.

In the puncture resistant tube for a bicycle tire and the foam mold for the manufacture of the puncture resistant tube for a bicycle tire according to further another aspect of the present invention, the foam mold for the manufacture of the puncture resistant tube for a bicycle tire includes the foam mold body and the foam nozzles. Accordingly, the elastic recess, the second depressed recess, and the elasticity-providing bridge can be automatically formed during the foaming process without an additional machining process.

In the puncture resistant tube for a bicycle tire and the foam mold for the manufacture of the puncture resistant tube for a bicycle tire according to another aspect of the present invention, the puncture resistant tube for a bicycle tire includes the weight-reducing member. It is therefore possible to reduce the weight of the puncture resistant tube for a bicycle tire. It is possible to prevent the tire from being either flattened or deformed by the weight. The puncture resistant tube for a bicycle tire may be selectively formed soft or hard considering, for example, the body shape of a user.

In the puncture resistant tube for a bicycle tire and the foam mold for the manufacture of the puncture resistant tube for a bicycle tire according to still another aspect of the present invention, the weight-reducing member is provided with the second depressed recess and the elasticity-providing bridge. Accordingly, the puncture resistant tube for a bicycle tire can be elastic while the weight thereof is reduced, whereby the balance of the bicycle tire can be adjusted in a simple manner.

### DESCRIPTION OF DRAWINGS

FIG. 1 is a cross-sectional view illustrating a bicycle tire to which a puncture resistant tube for a bicycle tire according to a first embodiment of the present invention is applied;
FIG. 2 is a cross-sectional view illustrating a portion of the bicycle tire to which the puncture resistant tube for a bicycle tire according to the first embodiment of the present invention is applied;
FIG. 3 illustrates part of a foam mold for the manufacture of the puncture resistant tube for a bicycle tire according to the first embodiment of the present invention;
FIG. 4 is a partially cutaway perspective view illustrating the puncture resistant tube for a bicycle tire according to the first embodiment of the present invention;
FIG. 5 is a partially cutaway perspective view illustrating a puncture resistant tube for a bicycle tire according to a second embodiment of the present invention;
FIG. 6 is a cross-sectional view illustrating a bicycle tire to which a puncture resistant tube for a bicycle tire according to a third embodiment of the present invention is applied;
FIG. 7 is a disassembled perspective view illustrating a portion of the puncture resistant tube for a bicycle tire according to the third embodiment of the present invention; and
FIG. 8 is a cross-sectional view illustrating a puncture resistant tube for a bicycle tire according to a fourth embodiment of the present invention.

### BEST MODE

Reference will now be made in detail to embodiments of a puncture resistant tube for a bicycle tire and a foam mold for the manufacture of the puncture resistant tube for a bicycle tire according to the present invention in conjunction with the accompanying drawings.

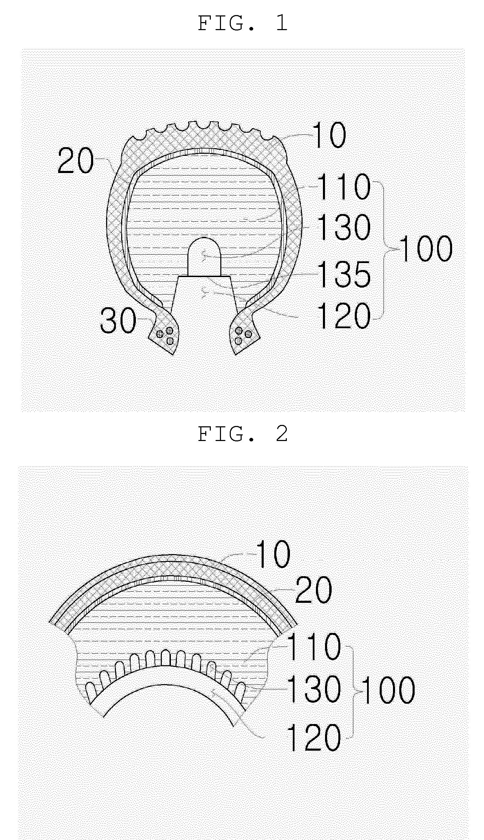

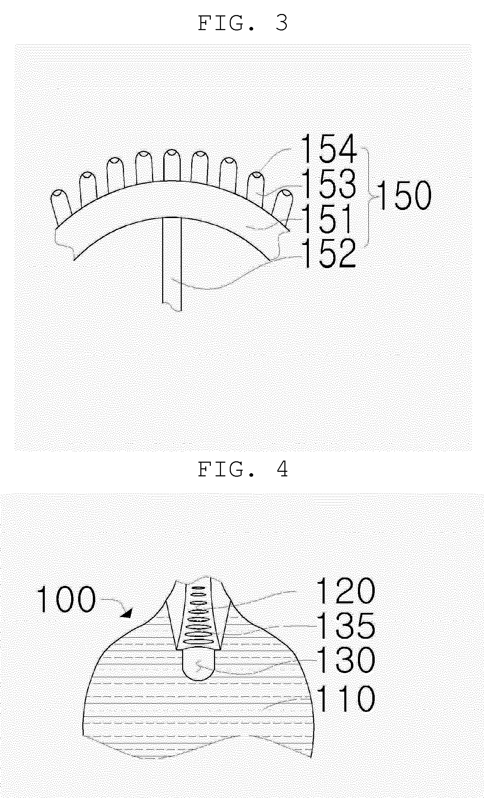

FIG. 1 is a cross-sectional view illustrating a bicycle tire to which a puncture resistant tube for a bicycle tire according to a first embodiment of the present invention is applied, FIG. 2 is a cross-sectional view illustrating a portion of the bicycle tire to which the puncture resistant tube for a bicycle tire according to the first embodiment of the present invention is applied, FIG. 3 illustrates part of a foam mold for the manufacture of the puncture resistant tube for a bicycle tire according to the first embodiment of the present invention, and FIG. 4 is a partially cutaway perspective view illustrating the puncture resistant tube for a bicycle tire according to the first embodiment of the present invention.

Referring to FIG. 1 to FIG. 4, a puncture resistant tube for a bicycle tire 100 according to the present embodiment is inserted into a bicycle tire 10. The puncture resistant tube for a bicycle tire 100 includes a tube body 110 and an elasticity-providing recess 120.

The bicycle tire 10 is to be fitted to the rim of a bicycle wheel, and has a tube insertion recess therein into which the tube body 110 can be inserted. The tube insertion recess is formed in an annular shape along the interior of the bicycle tire 10.

A piece of carcass fabric 20 is disposed on the inner wall of the tube insertion hole. A steel core 30 forming beads is inserted into the portion of the bicycle tire 10 that is fitted to the rim in order to reinforce the bicycle tire 10 such that the bicycle tire 10 does not accidentally peel off the rim.

The puncture resistant tube for a bicycle tire 100 may be inserted into and bonded to the tube insertion recess after being foam-molded separately from the bicycle tire 10, or may be directly foam-molded in the tube insertion recess.

The tube body 110 is inserted into the bicycle tire 10 along the tube insertion recess formed within the bicycle tire 10. The tube body 110 may be formed by foaming a foam material, such as natural rubber. Since the natural rubber or the like is used as the foam material of the tube body 110, the elasticity of the tube body 110 can be increased, the deformation of the tube body 110 in response to variations in ambient temperature can be reduced, and the tube body 110 can be lighter and more durable while the effects of corrosion and aging can be reduced.

The elasticity-providing recess 120 is depressed to a predetermined depth into the tube body 110 adjacent to the portion of the bicycle tire 10 to be fitted to the rim in order to provide elasticity, by which the tube body 110 can be deformed by external force from a person who is working on the bicycle tire 10 and subsequently be restored to the original shape thereof. The elasticity-providing recess 120 may be continuously depressed along the tube body 110.

It is possible to adjust the balance of the bicycle tire 10 with the puncture resistant tube for a bicycle tire 100 coupled thereto in a simple manner by adjusting the shape, the size, and the like of the elasticity-providing recess 120 formed in the puncture resistant tube for a bicycle tire 100. Consequently, it is possible to obtain elasticity combinations optimized for the front wheel and the rear wheel of a bicycle.

In addition, in the process in which the bicycle tire 10 with the puncture resistant tube for a bicycle tire 100 coupled thereto is fitted to the rim, when the portion of the bicycle tire 10 to be fitted to the rim (the portion into which the steel core 30 is inserted) is shrunk by external force such that the bicycle tire 10 with the tube body 110 inserted into the tube insertion recess thereof is fitted to the rim, elastic force is accumulated in the portion of the tube body 110 surrounding the elasticity-providing recess 120 while the elasticity-providing recess 120 is being shrunk. When the bicycle tire 10 is completely fitted to the rim, the elasticity-providing recess 120 is restored to the original shape thereof by the elastic force accumulated in the portion of the tube body 110 surrounding the elasticity-providing recess 120, whereby the portion of the tire 10 fitted to the rim can be restored to the original shape thereof.

Since the elasticity-providing recess 120 is formed in the tube body 110 as described above, it is possible to simply adjust the balance of the bicycle tire 10 with the puncture resistant tube for a bicycle tire 100 coupled thereto by adjusting the shape, size, or the like of the elasticity-providing recess formed in the puncture resistant tube for a bicycle tire 100, whereby elasticity combinations optimized for the front wheel and the rear wheel of a bicycle can be obtained. It is possible to easily attach or detach the bicycle tire 10 to or from the rim. The weight of the bicycle tire 10 is reduced by an amount equal to the size of the elasticity-providing recess 120, whereby the bicycle tire 10 can be lightened.

A second depressed recess 130 is formed in the bottom of the elasticity-providing recess 120, i.e. the surface facing the central portion of the tube body 110. The second depressed recess 130 is depressed to a predetermined depth in the direction of the central portion of the tube body 110. An elasticity-providing bridge 135 delimits the second depressed recess 130 while extending across the second depressed recesses 130.

According to the present embodiment, as an exemplary illustration, the second depressed recess 130 is delimited by the elasticity-providing bridge 135 while being configured as a plurality of depressions having a circular shape.

Since the second depressed recess 130 and the elasticity-providing bridge 135 are formed as above, when the portion of the bicycle tire 10 to be fitted to the rim is shrunk by external force such that the bicycle tire 10 with the tube body 110 inserted into the tube insertion recess thereof is fitted to the rim, the second depressed recess 130 and the elasticity-providing bridge 135 are shrunk together with the elasticity-providing recess 120, such that elastic force is accumulated in the portion of the tube body 110 surrounding the second depressed recess 130 and the elasticity-providing bridge 135 as well as the portion of the tube body 110 surrounding the elasticity-providing recess 120. When the bicycle tire 10 is completely fitted to the rim, the elasticity-providing recess 120, the second depressed recess 130, and the elasticity-providing bridge 135 are restored to the original shape thereof by the elastic force accumulated in the portion of the tube body 110 surrounding the elasticity-providing recess 120, the portion of the tube body 110 surrounding the second depressed recess 130, and the elasticity-providing bridge 135. Consequently, the portion of the bicycle tire 10 fitted to the rim can be rapidly restored to the original shape thereof.

Since the tube body 110 is provided with the second depressed recess 130 and the elasticity-providing bridge 135 together with the elasticity-providing recess 120 as described above, it is possible to simply adjust the balance of the bicycle tire 10 with the puncture resistant tube for a bicycle tire 100 coupled thereto by adjusting the shape, size, or the like of the second depressed recess 130 and the elasticity-providing bridge 135 formed in the tube body 110. It is therefore possible to obtain more precise elasticity combinations optimized for the front wheel and the rear wheel of a bicycle. Since the bicycle tire 10 into which the puncture resistant tube for a bicycle tire 100 is inserted can be fitted to the rim in a simple manner, it is possible to more easily attach or detach the bicycle tire 10 to or from the rim. The weight of the bicycle tire 10 is reduced by an amount equal to the size of the elasticity-providing recess 120 and the size of the second depressed recess 130, whereby the bicycle tire 10 can be further lightened.

In addition, a foam mold 150 for the manufacture of a puncture resistant tube for a bicycle tire according to an embodiment is intended to manufacture the puncture resistant tube for a bicycle tire 100 according to the first embodiment. The foam mold 150 includes a foam mold body 151 and foam nozzles 153.

The foam mold body 151 is annular shaped, and allows a foam material supplied from an external source to flow therethrough such that the foam material is inserted into the tube insertion recess to form the tube body 110 along the tube insertion recess.

A plurality of the foam nozzles 153 protrudes outward from the foam mold body 151 by a predetermined length, and allows the foam material flowing along the foam mold body 151 to foam within the tube insertion recess.

When the foam material is injected through the foam nozzles 153, the portion of the tube insertion recess into which the foam mold body 151 is inserted forms the elasticity-providing recess 120 of the tube body 110, the portion of the tube insertion recess into which the foam nozzles 153 are inserted forms the second depressed recess 130 of the tube body 110, and the a portion of the tube insertion recess between the foam nozzles 153 forms the elasticity-providing bridge 135.

That is, after foaming is performed in the state in which the foam mold body 151 is inserted into the tube insertion recess, removing the foam mold body 151 from the tube insertion recess can leave the elasticity-providing recess 120 in the tube body 110 without an additional work. The same explanation may apply to the formation of the second depressed recess 130 and the elasticity-providing bridge 135, and repetitive descriptions thereof will be omitted herein.

Reference numeral 152 indicates a supply pipe through which the foam material is supplied to the foam mold body 151 from the external source, and reference numeral 154 indicates nozzle holes formed in the distal ends of the foam nozzles 153 through which the foam material is injected.

Since the foam mold 150 for the manufacture of a puncture resistant tube for a bicycle tire includes the foam mold body 151 and the foam nozzles 153 as described above, the elasticity-providing recess 120, the second depressed recess 130, and the elasticity-providing bridge 135 can be automatically formed during the foaming process without an additional machining process.

Descriptions of other embodiments of the puncture resistant tube for a bicycle tire and the foam mold for the manufacture of the puncture resistant tube for a bicycle tire according to the present invention will be given below. In the following, descriptions of some features will be omitted since they are identical to those of the above-described first embodiment of the present invention.

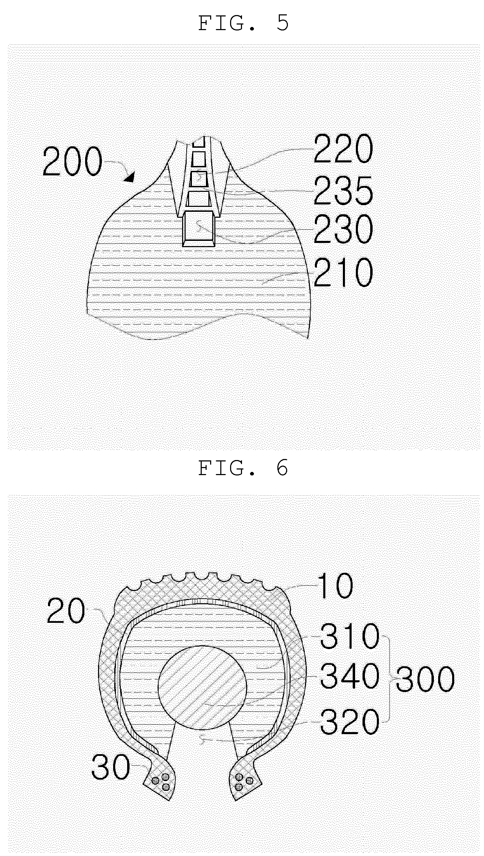

FIG. 5 is a partially cutaway perspective view illustrating a puncture resistant tube for a bicycle tire according to a second embodiment of the present invention.

Referring to FIG. 5, according to the present embodiment, a second depressed recess 230 is delimited by an elasticity-providing bridge 235 while being configured as a plurality of depressions having a circular shape.

It should be understood that the second depressed recess can have a variety of other shapes that fall within the scope of the present invention.

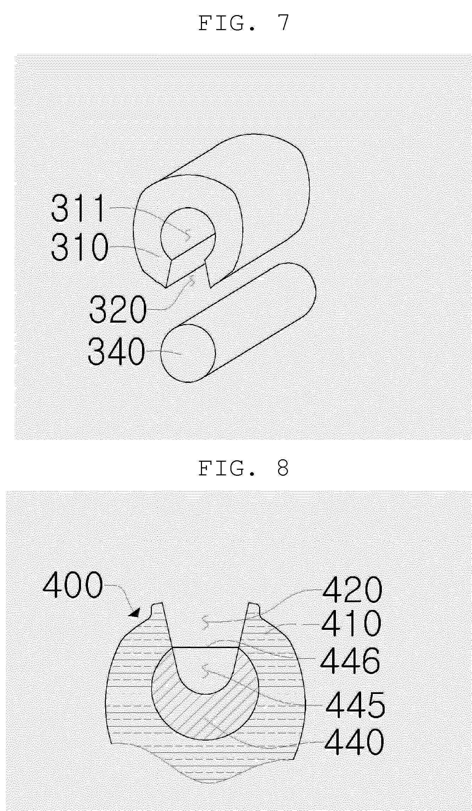

FIG. 6 is a cross-sectional view illustrating a bicycle tire to which a puncture resistant tube for a bicycle tire according to a third embodiment of the present invention is applied, and FIG. 7 is a disassembled perspective view illustrating a portion of the puncture resistant tube for a bicycle tire according to the third embodiment of the present invention.

Referring to FIG. 6 and FIG. 7, a puncture resistant tube for a bicycle tire 300 according to the present embodiment includes a tube body 310, an elasticity-providing recess 320, and a weight-reducing member 340. The tube body 310 is inserted into a bicycle tire 10 along a tube insertion recess formed within the bicycle tire 10. The elasticity-providing recess 320 is depressed to a predetermined depth into the tube body 310 adjacent to the portion of the bicycle tire 10 to be fitted to the rim. The weight-reducing member 340 is inserted into the tube body 310, and is able to reduce the weight of the tube body 310.

The weight-reducing member 340 is formed of a high-strength synthetic resin that is highly elastic and light. The weight-reducing member 340 may be molded from a foam material. It is possible to make the weight-reducing member 340 soft or hard by adjusting the composition ratios of the foam material.

The weight-reducing member 340 is manufactured in an annular shape such that it can be inserted into the tube body 310 along a weight-reducing member insertion recess 311 formed within the tube body 310. The weight-reducing member insertion recess 311 communicates with the elasticity-providing recess 320, such that the weight-reducing member 340 can be fixedly inserted into the weight-reducing member insertion recess 311 after passing through the elasticity-providing recess 320.

When the portion of the bicycle tire 10 to be fitted to the rim is shrunk by external force such that the bicycle tire 10 with the tube body 310 inserted into the tube insertion recess thereof is fitted to the rim, elastic force is accumulated in the portion of the tube body 310 surrounding the elasticity-providing recess 320 while the elasticity-providing recess 320 is being shrunk. When the bicycle tire 10 is completely fitted to the rim, the elasticity-providing recess 320 is restored to the original shape thereof by the elastic force accumulated in the portion of the tube body 310 surrounding the elasticity-providing recess 320, whereby the portion of the tire 10 fitted to the rim can be restored to the original shape thereof.

Since the puncture resistant tube for a bicycle tire 300 includes the weight-reducing member 340 as described above, it is possible to reduce the weight of the puncture resistant tube for a bicycle tire 300. Accordingly, it is possible to prevent the tire from being either flattened or deformed by the weight. In addition, the puncture resistant tube for a bicycle tire 300 may be selectively formed soft or hard considering, for example, the body shape of a user.

FIG. 8 is a cross-sectional view illustrating a puncture resistant tube for a bicycle tire according to a fourth embodiment of the present invention.

Referring to FIG. 8, in a puncture resistant tube for a bicycle tire 400 according to the present embodiment, a weight-reducing member 440 is provided with a second depressed recess 445 and an elasticity-providing bridge 446 as will be described below. Except these features, the overall configuration of the puncture resistant tube for a bicycle tire 400 is similar to that of the above-described puncture resistant tube for a bicycle tire 300 according to the third embodiment.

According to the present invention, a portion of the weight-reducing member 440 is exposed along the elasticity-providing recess 420 in the direction of the rim. The second depressed recess 445 is formed in the portion of the weight-reducing member 440 exposed along the elasticity-providing recess 420. The second depressed recess 445 is depressed in the direction of the central portion of the tube body 410. The second depressed recess 445 has an elasticity-providing bridge 446 that delimits the second depressed recess 445 into a plurality of sections while extending across the second depressed recess 445.

The second depressed recess 445 may be delimited by the elasticity-providing bridge 446 such that the second depressed recess 445 is divided into a plurality of spaces along the portion of the weight-reducing member 440 exposed along the elasticity-providing recess 420.

When the portion of a bicycle tire to be fitted to a rim is shrunk by external force such that the bicycle tire with the tube body 410 inserted into a tube insertion recess thereof is fitted to the rim, the second depressed recess 445 and the elasticity-providing bridge 446 are shrunk together with the elasticity-providing recess 420, such that elastic force is accumulated in the portion of the tube body 410 surrounding the second depressed recess 445 and the elasticity-providing bridge 446 as well as the portion of the tube body 410 surrounding the elasticity-providing recess 420. When the bicycle tire 10 is completely fitted to the rim, the elasticity-providing recess 420, the second depressed recess 445, and the elasticity-providing bridge 446 are restored to the original shape thereof by the elastic force accumulated in the portion of the tube body 410 surrounding the elasticity-providing recess 420, the portion of the tube body 410 surrounding the second depressed recess 445, and the elasticity-providing bridge 446. Consequently, the portion of the bicycle tire fitted to the rim can be rapidly restored to the original shape thereof.

Since the weight-reducing member 440 is provided with the second depressed recess 445 and the elasticity-providing bridge 446 as described above, the puncture resistant tube for a bicycle tire 400 can be elastic while the weight thereof is reduced, whereby the balance of the bicycle tire can be adjusted in a simple manner and the bicycle tire can be attached to and detached from the rim in a simple manner.

While the present invention has been shown and described with reference to the certain exemplary embodiments thereof, it will be understood by a person skilled in the art that various changes and variations may be made therein without departing from the spirit and scope of the present invention as defined by the appended claims and their equivalents. It should be understood, however, that all such changes and variations fall within the scope of the present invention.

### INDUSTRIAL APPLICABILITY

In the puncture resistant tube for a bicycle tire and the foam mold for the manufacture of the puncture resistant tube for a bicycle tire according to an aspect of the present invention, the balance of the bicycle tire can be adjusted in a simple manner, and the bicycle tire having the puncture resistant tube inserted thereinto can be fitted to the rim in a simple manner. Therefore, it is considered that the present invention has high industrial applicability.

## Claims

1. A puncture resistant tube that is inserted into a bicycle tire fitted to a rim of a bicycle wheel, the puncture resistant tube comprising:
a tube body inserted into the bicycle tire along a tube insertion recess formed within the bicycle tire; an elastic recess depressed to a predetermined depth into the tube body adjacent to a portion of the bicycle tire to be fitted to the rim, wherein, when the portion of the bicycle tire to be fitted to the rim is shrunk by external force such that the bicycle tire with the tube body inserted into the tube insertion recess thereof is fitted to the rim, elastic force is accumulated in a portion of the tube body surrounding the elastic recess while the elastic recess is being shrunk, and when the bicycle tire is completely fitted to the rim, the elastic recess is restored to an original shape thereof by the elastic force accumulated in the portion of the tube body surrounding the elastic recess, whereby the portion of the tire fitted to the rim is restored to an original shape thereof; a second depressed recess depressed in a bottom of the elastic recess in a direction of a central portion of the tube body; and an elasticity-providing bridge formed in the second depressed recess, the elasticity-providing bridge delimiting the second depressed recess while extending across the second depressed recess, wherein, when the portion of the bicycle tire to be fitted to the rim is shrunk by the external force such that the bicycle tire with the tube body inserted into the tube insertion recess thereof is fitted to the rim, the second depressed recess and the elasticity-providing bridge are shrunk together with the elastic recess, such that elastic force is accumulated in a portion of the tube body surrounding the second depressed recess and the elasticity-providing bridge as well as the portion of the tube body surrounding the elastic recess, and when the bicycle tire is completely fitted to the rim, the elastic recess, the second depressed recess, and the elasticity-providing bridge are restored to an original shape thereof by the elastic force accumulated in the portion of the tube body surrounding the elastic recess, the portion of the tube body surrounding the second depressed recess, and the elasticity-providing bridge, whereby the portion of the bicycle tire fitted to the rim is restored to the original shape thereof.

2. The puncture resistant tube according to claim 1, wherein the elastic recess is continuously depressed along the tube body.

3. Deleted

4. A foam mold for manufacture of the puncture resistant tube for a bicycle tire as claimed in claim 1, the foam mold comprising:
a foam mold body allowing a foam material supplied from an external source to flow therethrough such that the foam material is inserted into the tube insertion recess to form the tube body along the tube insertion recess; and a plurality of the foam nozzles protruding from the foam mold body by a predetermined length, the plurality of the foam nozzles allowing the foam material flowing along the foam mold body to foam within the tube insertion recess, wherein, when the foam material is injected through the foam nozzles, a portion of the tube insertion recess into which the foam mold body is inserted forms the elastic recess of the tube body, a portion of the tube insertion recess into which the foam nozzles are inserted forms the second depressed recess of the tube body, and a portion of the tube insertion recess between the foam nozzles forms the elasticity-providing bridge.

5. A puncture resistant tube that is inserted into a bicycle tire fitted to a rim of a bicycle wheel, the puncture resistant tube comprising:
a tube body inserted into the bicycle tire to be fitted to the rim of the bicycle wheel; an elasticity-providing recess depressed to a predetermined depth into the tube body adjacent to a portion of the bicycle tire to be fitted to the rim; and a weight-reducing member inserted into the tube body to reduce a weight of the tube body, wherein, when the portion of the bicycle tire to be fitted to the rim is shrunk by external force such that the bicycle tire with the tube body inserted thereinto is fitted to the rim, elastic force is accumulated in a portion of the tube body surrounding the elasticity-providing recess while the elasticity-providing recess is being shrunk, and when the bicycle tire is completely fitted to the rim, the elasticity-providing recess is restored to an original shape thereof by the elastic force accumulated in the portion of the tube body surrounding the elasticity-providing recess, whereby the portion of the bicycle tire fitted to the rim is restored to an original shape thereof; a portion of the weight-reducing member exposed along the elasticity-providing recess in a direction of the rim; a second depressed recess formed in a portion of the weight-reducing member exposed along the elasticity-providing recess, the second depressed recess being depressed in a direction of a central portion of the tube body; and an elasticity-providing bridge formed in the second depressed recess to delimit the second depressed recess while extending across the second depressed recess, wherein, when the portion of the bicycle tire to be fitted to a rim is shrunk by external force such that the bicycle tire with the tube body inserted thereinto is fitted to the rim, the second depressed recess and the elasticity-providing bridge are shrunk together with the elasticity-providing recess, such that elastic force is accumulated in a portion of the tube body surrounding the second depressed recess and the elasticity-providing bridge as well as a portion of the tube body surrounding the elasticity-providing recess, and when the bicycle tire is completely fitted to the rim, the elasticity-providing recess, the second depressed recess, and the elasticity-providing bridge are restored to an original shape thereof by the elastic force accumulated in the portion of the tube body surrounding the elasticity-providing recess, the portion of the tube body surrounding the second depressed recess, and the elasticity-providing bridge, whereby the portion of the bicycle tire fitted to the rim is restored to the original shape thereof.

6. Deleted
